# EUROPÄISCHE PATENTSCHRIFT

(11) **EP 4 187 858 B1**
(45) Veröffentlichungstag und Bekanntmachung des Hinweises auf die Patenterteilung: **07.10.2026**
(21) Anmeldenummer: 21211095.1
(22) Anmeldetag: 29.11.2021
(51) Int. Cl.: H04L 12/40, G06F 11/20, H04L 69/40

(54) **EINE SEKUNDÄRSTEUEREINHEIT FÜR EIN FAHRZEUG MIT EINER PRIMÄRSTEUEREINHEIT UND EINEM DATENÜBERTRAGUNGSWEG**
A SECONDARY CONTROL UNIT FOR A VEHICLE WITH A PRIMARY CONTROL UNIT AND A DATA TRANSMISSION PATH
UNITÉ DE COMMANDE SECONDAIRE POUR UN VÉHICULE DOTÉ D'UNE UNITÉ DE COMMANDE PRIMAIRE ET D'UN CHEMIN DE TRANSMISSION DE DONNÉES

(43) Veröffentlichungstag der Anmeldung: 31.05.2023
(73) Patentinhaber: KNORR-BREMSE Systeme für Nutzfahrzeuge GmbH, 80809 München (DE)
(72) Erfinder: LEIBBRAND, Jonas, 71735 Eberdingen-Nußdorf (DE); JUNDT, Oliver, 74394 Hessigheim (DE); CLEPHAS, Sabine, 73734 Esslingen (DE); SCHÄFERS, Andreas, 71739 Oberriexingen (DE)

(56) Entgegenhaltungen:
- US-A1- 2011 161 538
- ZELTWANGER HOLGER: "CANopen, Das standarisierte, eingebettete Netzwerk. 2. Auflage", -, 1 January 2008 (2008-01-01), pages 1 - 71, XP055809914
- BOTERENBROOD H: "CANopen high-level protocol for CAN-bus", no. Version 3.0, 20 March 2000 (2000-03-20), pages 1 - 23, XP002589005, Retrieved from the Internet <URL:http://www.nikhef.nl/pub/departments/ct/po/doc/CANopen30.pdf> [retrieved on 20100625]

## Beschreibung

Die vorliegende Erfindung bezieht sich auf eine Sekundärsteuereinheit für ein Fahrzeug mit einer Primärsteuereinheit und einem Datenübertragungsweg, ein Datenkommunikationsnetzwerk für das Fahrzeug, ein Verfahren für ein redundantes Bereitstellen von ersten Nutzinformationen in dem Fahrzeug, und insbesondere auf ein Verfahren einer geteilten Nachrichtenübertragung für redundante Systeme in automatisch betriebenen Fahrzeugen.

Steuereinheiten in elektronischen Datenverarbeitungsanlagen, Maschinen, Gebäuden, Fahrzeugen, Flugzeugen oder Schiffen kommunizieren oft über gemeinsame Datenübertragungswege. Insbesondere können dies drahtgebundene oder drahtlose Bussysteme bzw. Datenkommunikationsnetzwerke sein. In Fahrzeugen bilden etwa ein Datenbus und daran angeschlossene Geräte ein Controller Area Network (CAN). Dabei tauschen die Geräte Daten in einer festgelegten Form, nämlich gemäß einem oder mehreren bestimmten Protokollen, aus. Gemäß einem solchen Protokoll, etwa dem CAN 2.0-Protokoll oder dem CAN-FD-Protokoll, werden die Informationen in Datenrahmen (data frames) organisiert, die jeweils eine Mehrzahl vordefinierter Felder aufweisen. Darunter enthalten bestimmte Felder eine Nutzinformation, wie beispielsweise eine Anweisung oder einen Messwert. Diesen Feldern zeitlich vorausgehende und zeitlich anschließende Felder enthalten unter anderem etwa Informationen zur Begrenzung des Datenrahmens (etwa in einem "start of frame"- und einem "end of frame"-Feld), eine Identifikation der sendenden Steuereinheit, eine Information über die Datenlänge sowie eine Prüfsumme, mit der Fehler bei der Übertragung erkannt werden können. Insbesondere bei Feldbussen weisen die Datenrahmen sogenannte Identifikationsfelder (identifier) auf, deren Werte etwa das sendende Steuergerät, ein oder mehrere Empfangsgeräte oder eine Priorität des Datenrahmens für seine Übertragung auf dem Bus festlegen.

In höheren Stufen autonom operierende Fahrzeuge benötigen zur Erhöhung der Fahrsicherheit eine Absicherung von Vorgängen im Fahrzeug. Dies betrifft auch die Geräte sowie die Übertragung von Daten im Datenkommunikationsnetzwerk.

Im Stand der Technik ist dazu bekannt, geeignete Redundanzen zu erzeugen, und insbesondere Steuereinheiten und/oder Aktoren sowie Kommunikationsverbindungen doppelt auszuführen.

Ein Beispiel für eine solche doppelte Ausführung findet sich etwa in dem Dokument WO 2018/237121 A1. Es offenbart ein fehlertolerantes autonom fahrendes System, das eine Steuereinheit mit mehreren Prozessoren umfasst. Jeder der individuell versorgten und selbständig operierenden Prozessoren überwacht die anderen und nimmt Sicherheitsfunktionen wahr, wenn in den anderen Prozessoren Ausfälle oder Fehler festgestellt werden. Insbesondere kann etwa jeder der Prozessoren individuell Sensordaten empfangen und verarbeiten sowie selbständig Peripheriegeräte aktivieren.

Das Dokument DE 102 43 713 B4 offenbart mindestens zwei redundant ausgelegte Steuergeräte, die unabhängig voneinander jeweils ein Ausgangsdatum erzeugen. Eines der Ausgangsdaten wird durch eine Bewertung ausgewählt und danach als Nutzinformation über einen Datenbus bereitgestellt wird.

Das Dokument US 2011/0161538 A1 offenbart einen Datenbus mit zwei redundanten Master-Netzwerkmodulen, wobei eines der Netzwerkmodule die Masterrolle und das andere in einem Standby-Zustand einnimmt. Neben eindeutig zugewiesenen Adressen verfügen die beiden Netzwerkmodule über eine geteilte Adresse, derer sich jeweils das Netzwerkmodul in der Masterrolle bedient.

Probleme der herkömmlichen Lösungen bestehen vor allem in der benötigten Vervielfältigung von Geräten, Datenübertragungswegen und Funktionen. Dies macht die herkömmlichen Systeme nicht nur teurer und in der Herstellung aufwendiger, sondern führt auch häufig auf Schwierigkeiten aufgrund von räumlichen Einschränkungen.

Es besteht insbesondere ein Bedarf nach Konzepten, Redundanzen kostengünstig und effizient in bereits bestehende Architekturen einzuführen.

Zumindest ein Teil der genannten Probleme wird durch eine Sekundärsteuereinheit nach Anspruch 1, ein Datenkommunikationsnetzwerk nach Anspruch 7, ein Nutzfahrzeug nach Anspruch 11, ein Verfahren für ein redundantes Bereitstellen von ersten Nutzinformationen nach Anspruch 12, ein Verfahren zum Einrichten einer Redundanz nach Anspruch 13 und ein Speichermedium nach Anspruch 14 gelöst. Weitere abhängige Ansprüche definieren vorteilhafte Ausführungsformen der Gegenstände der unabhängigen Ansprüche.

Die vorliegende Erfindung bezieht sich auf eine Sekundärsteuereinheit für ein Fahrzeug, insbesondere ein Nutzfahrzeug, das eine Primärsteuereinheit und einen Datenübertragungsweg umfasst. Unter dem Begriff Steuereinheit soll dabei allgemein ein Gerät verstanden werden, das ausgebildet ist, um Daten auf dem Datenübertragungsweg bereitzustellen.

Die Primärsteuereinheit ist ausgebildet, um erste Nutzinformationen unter einer eindeutig auf die Primärsteuereinheit verweisenden ersten Senderidentifikation über den Datenübertragungsweg bereitzustellen bzw. zu versenden. Dabei sind die ersten Nutzinformationen für weitere Geräte oder Einrichtungen des Fahrzeugs bestimmt, die ebenfalls über den Datenübertragungsweg kommunizieren. Insbesondere sind die weiteren Geräte oder Einrichtungen vorteilhafterweise dazu ausgebildet, die ersten Nutzinformationen anhand der ersten Senderinformation unter anderen Daten auf dem Datenübertragungsweg zu detektieren und/oder zu empfangen.

Die Sekundärsteuereinheit ist ausgebildet, um zweite Nutzinformationen unter einer eindeutig auf die Sekundärsteuereinheit verweisenden zweiten Senderidentifikation über den Datenübertragungsweg bereitzustellen. Weiter ist sie ausgebildet, um eine Bedingung festzustellen und bei Vorliegen der Bedingung Ersatzinformationen unter der ersten Senderidentifikation über den Datenübertragungsweg bereitzustellen. Dabei sind die Ersatzinformationen die ersten Nutzinformationen oder damit verknüpfte Nutzinformationen.

Vorteilhafterweise sind die Primärsteuereinheit und die Sekundärsteuereinheit nicht integriert, also nicht in einer Einheit zusammengefasst. Insbesondere sind die erste Senderidentifikation und die zweite Senderidentifikation verschieden. In Ausführungsbeispielen ist die Primärsteuereinheit zudem für eine andere Aufgabe bzw. für einen anderen Zweck vorgesehen als die Sekundärsteuereinheit. Die Primärsteuereinheit und die Sekundärsteuereinheit können lediglich durch den Datenübertragungsweg verbunden sein, also keine weitere Kommunikationsmöglichkeit als diejenige über den Datenübertragungsweg aufweisen.

Bei den ersten und zweiten Nutzinformationen sowie den Ersatzinformationen kann es sich insbesondere um wiederholt bereitzustellende, fortlaufend oder mit einer bestimmten Periodizität generierte Daten (z.B. von Sensoren) handeln. Die Ersatzinformationen werden vorteilhafterweise nur dann erzeugt und bereitgestellt, wenn die ersten Nutzinformationen auf dem Datenübertragungsweg ausfallen bzw. nicht oder nicht wie geplant bereitgestellt werden. Die ersten Nutzinformationen müssen dabei nicht alle Informationen umfassen, die durch die Primärsteuereinheit über den Datenbus bereitgestellt werden. Auch muss nicht vorgesehen sein, dass für jede ausgefallene oder abgelaufene erste Nutzinformation eine entsprechende Ersatzinformation bereitgestellt wird. Vielmehr können sich beispielsweise eine Frequenz, mit der die Ersatzinformationen bereitgestellt werden, und eine Frequenz, mit der die ersten Nutzinformationen bereitgestellt werden, unterscheiden.

Entsprechend erfasst die Bedingung, dass die Primärsteuereinheit die ersten Nutzinformationen nicht oder nicht wie erforderlich bereitstellt. Dabei stellt die Primärsteuerung die ersten Nutzinformationen etwa dann nicht bereit, wenn sie über einen bestimmten Zeitraum die ersten Nutzinformationen nicht sendet, obwohl dies zu erwarten gewesen wäre. Die Primärsteuerung stellt die ersten Nutzinformationen beispielsweise dann nicht wie erforderlich bereit, wenn sie die ersten Nutzinformationen mit einer falschen Wiederholungs- oder Folgerate oder in fehlerhaft aufgebauten Datenrahmen bereitstellt.

Die Sekundärsteuereinheit ist vorteilhafterweise zu einer anderen Funktion als die Primärsteuereinheit ausgebildet. Insbesondere können die zweiten Nutzinformationen von den ersten Nutzinformationen nach Form, Inhalt und Bestimmung verschieden sein. Allerdings können die Funktionen der Primärsteuereinheit und der Sekundärsteuereinheit gleichartig sein, so dass innerhalb der Sekundärsteuereinheit ähnliche Prozesse wie in der Primärsteuereinheit ablaufen können. Die Sekundärsteuereinheit kann ausgebildet sein, um bei einem Ausfall der Primärsteuereinheit deren Prozesse zumindest teilweise zu übernehmen, um die Ersatzinformationen über den Datenübertragungsweg bereitzustellen. Dabei ist vorteilhafterweise das Bereitstellen der zweiten Nutzinformationen unabhängig von dem Bereitstellen der Ersatzinformationen. Es ist mithin unbeachtlich, ob die Sekundärsteuereinheit, etwa in einem zeitlichen oder kausalen Zusammenhang mit den ersten Nutzinformationen oder den Ersatzinformationen, tatsächlich die zweiten Nutzinformationen bereitstellt. Wichtig ist, dass die Sekundärsteuereinheit "üblicherweise" bzw. in einem Regelbetrieb Informationen mit einer eindeutig auf sie verweisenden zweiten Senderidentität über den Datenübertragungsweg bereitstellen kann.

Die Ersatzinformationen sind so beschaffen, dass sie von den ersten Nutzinformationen abhängige Funktionen von am Datenübertragungsweg angeschlossenen Geräten weiterhin ermöglichen. Insbesondere können die Ersatzinformationen die ersten Nutzinformationen selbst sein, oder die Ersatzinformationen können inhaltlich gleich oder gleichwertig zu ersten Nutzinformationen sein, wie sie die Primärsteuereinheit gesendet hätte oder gesendet haben sollte. Die Ersatzinformationen können jedoch auch näherungsweise äquivalente Informationen zu den ersten Nutzinformationen umfassen. **In** Ausführungsbeispielen stellt die Sekundärsteuereinheit die Ersatzinformationen in derselben Datenformatierung bereit, wie die Primärsteuereinheit die ersten Nutzerdaten bereitstellt.

Die Sekundärsteuereinheit stellt die Ersatzinformationen nicht mit ihrer eigenen, zweiten Senderidentifikation, sondern mit der ersten Senderidentifikation der Primärsteuereinheit bereit. Dadurch können die Geräte, die zu einem Empfang der ersten Nutzinformationen von der ersten Sendeeinheit ausgebildet sind, die Ersatzinformationen ebenfalls detektieren bzw. empfangen. Die Empfängergeräte können auch ausgebildet sein, um Informationen über den Datenübertragungsweg ausschließlich oder notwendigerweise dann zu empfangen, wenn die Informationen unter der ersten Senderidentifikation auf dem Datenübertragungsweg bereitgestellt worden sind.

Die ersten Nutzinformationen, zweiten Nutzinformationen und die Ersatzinformationen können in Datenpaketen oder Datenrahmen mit vorbestimmter Struktur versendet werden. Der Datenübertragungsweg kann für eine Übertragung von Daten in bestimmten Datenrahmen vorgesehen bzw. ausgebildet sein.

Der Datenübertragungsweg kann zu einer seriellen und/oder nichtdeterministischen Übertragung von Informationen bzw. von Daten ausgebildet sein. Insbesondere kann für Datenrahmen eine Arbitrierung (zum Kontrollieren eines Empfangs) und/oder Priorisierung (zum Festlegen einer zeitlichen Übertragungsabfolge bzw. einer Vermeidung von Kollisionen) stattfinden, die mit den Senderidentitäten verknüpft ist bzw. sind. In solchen Fällen erfahren die Ersatzinformationen aufgrund ihrer Bereitstellung unter der ersten Senderidentität auch dieselbe Arbitrierung oder Priorisierung wie die ersten Nutzinformationen.

Optional ist die Primärsteuereinheit ausgebildet, um erste Auslöseinformationen zu empfangen und darauf basierend die ersten Nutzinformationen zu erzeugen, und die Sekundärsteuereinheit ist ausgebildet, um zweite Auslöseinformationen zu empfangen und darauf basierend die Ersatzinformationen zu erzeugen.

Die Auslöseinformationen lösen die Erzeugung der entsprechenden Informationen in der jeweiligen Steuereinheit aus und/oder ermöglichen diese Erzeugung. Insbesondere kann es sich bei den Auslöseinformationen um Daten von Sensoren handeln. In Ausführungsbeispielen erreichen die Auslöseinformationen die Primär- und Sekundärsteuereinheit nicht über den Datenübertragungsweg, sondern über andere Kanäle, beispielsweise über feste Signalleitungen oder über eine drahtlose Kommunikation. Es ist allerdings auch möglich, dass die Auslösedaten die Primärsteuereinheit und die Sekundärsteuereinheit jeweils ganz oder teilweise über den Datenübertragungsweg erreichen.

Vorteilhafterweise ist die Sekundärsteuereinheit zudem ausgebildet, um auch die zweiten Nutzinformationen basierend auf den zweiten Auslöseinformationen zu erzeugen. Beispielsweise kann die Sekundärsteuereinheit in einem Regelbetrieb die zweiten Nutzinformationen basierend auf Daten eines an die Sekundärsteuereinheit angeschlossenen Sensors und nach dem Feststellen der Bedingung die Ersatzinformationen ebenfalls basierend auf den Daten dieses Sensors erzeugen. Dies kann insbesondere der Fall sein, wenn die Sekundärsteuereinheit für eine ähnliche Aufgabe wie die Primärsteuereinheit vorgesehen ist.

In Ausführungsbeispielen sind die ersten Auslöseinformationen und die zweiten Auslöseinformationen teilweise oder vollständig identisch; sie können beispielsweise von demselben Sensor erzeugt worden sein. In anderen Ausführungsbeispielen stammen die ersten Auslöseinformationen und die zweiten Auslöseinformationen aus verschiedenen Quellen des gleichen Typs (beispielsweise aus zwei Raddrehzahlsensoren), die dieselbe oder eine für ein Ausführen von Funktionen in den Empfangsgeräten äquivalente oder ähnliche physikalische Größe messen (beispielsweise Raddrehzahlen an unterschiedlichen Rädern des Fahrzeugs). In weiteren Ausführungsbeispielen ist eine Quelle der ersten Auslöseinformationen von einer Quelle der zweiten Auslöseinformationen verschieden; beispielsweise kann es sich einmal um Messwerte aus einem Radar- oder Lidarsensor und einmal um Messwerte aus einem Ultraschallsensor handeln. Insbesondere in solchen Ausführungsbeispielen können auch die zweiten Nutzinformationen von den ersten Nutzinformationen sehr verschieden sein. Die Sekundärsteuereinheit kann zu anderen Funktionen ausgebildet bzw. technisch anders aufgebaut sein als die Primärsteuereinheit. Allerdings lassen die zweiten Auslöseinformationen auch ein Erzeugen etwa einer näherungsweise bestimmten ersten Nutzinformation zu.

Optional ist die Sekundärsteuereinheit ausgebildet, um unter der ersten Senderidentität über den Datenübertragungsweg bereitgestellte erste Nutzinformationen zu detektieren. Dabei basiert die Bedingung auf einer Abwesenheit (insbesondere kann die Bedingung in der Abwesenheit selbst bestehen) oder auf einem Ablauf (z.B. einem Time-Out oder einer Ungültigkeit) von unter der ersten Senderidentität über den Datenübertragungsweg bereitgestellten ersten Nutzinformationen.

Beispielsweise kann die Sekundärsteuereinheit eine Abwesenheit von ersten Nutzerinformationen für mehr als eine vordefinierte Zeitspanne auf dem Datenübertragungsweg oder ein Time-Out von ersten Nutzerinformationen bzw. von entsprechenden Datenrahmen der Primärsteuereinheit feststellen. Allgemein kann die Bedingung auf einem Detektieren der ersten Nutzinformation durch die Sekundärsteuereinheit basieren.

Optional weist die Sekundärsteuereinheit eine separate Datenverbindung zu der Primärsteuereinheit auf und ist ausgebildet, um ein Signal von der Primärsteuereinheit über die separate Datenverbindung zu empfangen, wobei die Bedingung dann auf einem Empfangen des Signals durch die Sekundärsteuereinheit basiert. Dies kann zusätzlich zu der vorangehend beschriebenen Detektion der ersten Nutzinformationen auf dem Datenübertragungsweg vorgesehen sein.

Das Signal kann beispielsweise als ein Heartbeat oder als ein anderes von der Primärsteuereinheit an die Sekundärsteuereinheit gesendetes Selbstdiagnosesignal ausgeführt sein. Die Bedingung kann von einem Informationsgehalt des Signals abhängig sein, oder insbesondere auch eine Abwesenheit des Signals umfassen. Das Signal kann auch ein Antwortsignal auf ein regelmäßig von der Sekundärsteuereinheit an die Primärsteuereinheit gesendetes Aufforderungssignal sein. Das Aufforderungssignal kann dabei über die separate Datenverbindung und/oder über den gemeinsamen Datenübertragungsweg gesendet werden.

Optional umfasst der Datenübertragungsweg zumindest einen (Daten-)Bus. Dabei kann es sich etwa um einen oder auch um mehrere drahtlose oder um einen oder mehrere drahtgebundene Busse handeln. Der zumindest eine Bus kann beispielsweise ein Daten-, Adress- oder Steuerbus sein. Er kann auch innerhalb eines Prozessors oder innerhalb einer elektronischen Datenverarbeitungseinheit liegen. Insbesondere kann der zumindest eine Bus jedoch Teil eines seriellen Datenkommunikationsnetzwerks, eines Feldbusnetzwerks, eines Controller Area Network (CAN) oder eines Controller Area Network Flexible Data-Rate (CAN FD) des Fahrzeugs sein. Besonders vorteilhafte Ausführungsbeispiele umfassen lediglich einen Bus.

Optional können dann die erste Senderidentität und die zweite Senderidentität jeweils zumindest einen Teil eines Identifizierungsfelds (engl. identifier, ID) nach einem Busprotokoll umfassen. Das Identifizierungsfeld kann Unterfelder umfassen, durch deren Inhalt eine Priorität, eine Parametergruppennummer (parmeter group number PGN) und/oder eine Senderidentität im engeren Sinne (engl. source identifier) festgelegt werden. Die Datenrahmen und ihre Übertragung können nach einem bestimmten Netzwerkprotokoll, etwa dem SAE J1939, erfolgen.

Ausführungsbeispiele beziehen sich auch auf ein Datenkommunikationsnetzwerk für ein Fahrzeug. Das Datenkommunikationsnetzwerk umfasst zumindest einen (Daten-)bus, eine Primärsteuereinheit, die ausgebildet ist, um erste Nutzinformationen unter einer eindeutig auf die Primärsteuereinheit verweisenden ersten Senderidentifikation auf dem zumindest einen Bus bereitzustellen, und eine Sekundärsteuereinheit, die wie vorangehend beschrieben ausgeführt ist.

Optional ist in dem Datenkommunikationsnetzwerk die Primärsteuereinheit eine elektronische Kontrolleinheit für eine erste Bremseinheit des Fahrzeugs, und die Sekundärsteuereinheit ist eine elektronische Kontrolleinheit für eine zweite Bremseinheit des Fahrzeugs.

In Ausführungsbeispielen sind die erste Bremseinheit zum Bremsen eines ersten Rads und die zweite Bremseinheit zum Bremsen eines zweiten, von dem ersten Rad verschiedenen Rads des Fahrzeugs ausgebildet. Das erste und das zweite Rad können sich an derselben Achse des Fahrzeugs befinden; beispielsweise auf unterschiedlichen Seiten des Fahrzeugs.

In anderen Ausführungsbeispielen sind die erste und die zweite Bremseinheit zum Bremsen desselben Rads vorgesehen.

Optional sind für den Fall, dass die Primärsteuereinheit die ersten Nutzinformationen auf einer Basis von ersten Auslöseinformationen und die Sekundärsteuereinheit die Ersatzinformationen (und gegebenenfalls auch die zweiten Nutzinformationen) auf einer Basis von zweiten Auslöseinformationen erzeugen, die ersten Auslöseinformationen Messwerte eines ersten Drehzahlsensors und die zweiten Auslöseinformationen Messwerte eines zweiten Drehzahlsensors. Dabei kann der erste Drehzahlsensor von dem zweiten Drehzahlsensor verschieden sein, oder der erste Drehzahlsensor kann mit dem zweiten Drehzahlsensor identisch sein. Handelt es sich um verschiedene Drehzahlsensoren, so können diese einem einzelnen oder zwei verschiedenen Rädern des Fahrzeugs zugeordnet sein.

Die Primärsteuereinheit kann Messwerte von Drehzahlen über einen Bus bereitstellen, um beispielsweise eine Gangschaltung des Fahrzeugs zu erreichen. Die Gangschaltung kann die Messwerte von Drehzahlen für ein korrektes Einlegen der Gänge verwenden. Es können weitere Steuergeräte an dem Bus ausgebildet sein, um über Bremseinheiten bereitgestellte Informationen zu empfangen.

In Ausführungsbeispielen kann vorgesehen sein, einen einzelnen Drehzahlsensor sowohl mit der Primär- als auch mit der Sekundärsteuereinheit zu verbinden, wobei der Drehzahlsensor sowie die Primär- und die Sekundärsteuereinheit einem bestimmten Rad des Fahrzeugs zugeordnet sind. Andere Ausführungsbeispiele weichen jedoch bezüglich der Zahl und Zuordnung der Drehzahlsensoren und der Zuordnung der Primär- und Sekundärsteuereinheit von diesem Aufbau ab. In Ausführungsbeispielen kann somit ein erster Drehzahlsensor Drehzahlen eines ersten Rades an die einer Bremseinheit des ersten Rades zugeordneten Primärsteuereinheit und ein zweiter Drehzahlsensor Drehzahlen eines zweiten Rades an die einer Bremseinheit des zweiten Rades zugeordneten Sekundärsteuereinheit senden. Die Sekundärsteuereinheit ist dann ausgebildet, um mit den Ersatzinformationen eine Approximation der ausgefallenen ersten Nutzinformationen auf dem Datenübertragungsweg bzw. dem zumindest einen Bus bereitzustellen.

Optional umfasst die Bedingung einen internen Fehler in der Primärsteuereinheit, einen Ausfall einer Energieversorgung der Primärsteuereinheit, einen Fehler in einer Ansteuerung der Primärsteuereinheit, oder einen Ausfall eines Sensors, der ausgebildet ist, um an die Primärsteuereinheit Messdaten zum Erzeugen der ersten Nutzinformation zu senden.

Ausführungsbeispiele beziehen sich auch auf ein Nutzfahrzeug mit einem Datenkommunikationsnetzwerk bzw. einer Sekundärsteuereinheit der vorhergehend beschriebenen Art. Bezüglich einer Schichtenarchitektur kann das Datenkommunikationsnetzwerk grundsätzlich in jeder Schicht (etwa einer Anwendungs-, Objekt-, Übertragungs- oder Bitübertragungsschicht) auftreten.

Ausführungsbeispiele beziehen sich auch auf ein Verfahren für ein redundantes Bereitstellen von ersten Nutzinformationen in einem Fahrzeug. Das Fahrzeug umfasst einen Datenübertragungsweg, eine Primärsteuereinheit, die ausgebildet ist, um erste Nutzinformationen unter einer eindeutig auf die Primärsteuereinheit verweisenden ersten Senderidentifikation über den Datenübertragungsweg bereitzustellen, und eine Sekundärsteuereinheit, die ausgebildet ist, um zweite Nutzinformationen unter einer eindeutig auf die Sekundärsteuereinheit verweisenden zweiten Senderidentifikation über den Datenübertragungsweg bereitzustellen. Das Verfahren umfasst
ein Ermitteln eines Vorliegens einer Bedingung; und
ein Bereitstellen, bei Vorliegen der Bedingung und durch die Sekundärsteuereinheit, von Ersatzinformationen unter der ersten Senderidentifikation über den Datenübertragungsweg.

Ausführungsbeispiele beziehen sich weiter auf ein Verfahren zum Einrichten einer Redundanz in einem Datenkommunikationsnetzwerk eines Fahrzeugs, wobei das Datenkommunikationsnetzwerk zumindest einen Bus sowie ein erstes Steuergerät und ein zweites Steuergerät umfasst, und wobei das erste Steuergerät ausgebildet ist, um erste Nutzerdaten unter einer eindeutig auf die erste Steuereinheit verweisenden ersten Senderidentifikation über den zumindest einen Bus bereitzustellen, und wobei das zweite Steuergerät ausgebildet ist, um zweite Nutzerdaten unter einer eindeutig auf die zweite Steuereinheit verweisenden zweiten Senderidentifikation über den zumindest einen Bus bereitzustellen. Vorteilhaft ist dabei insbesondere, wenn die erste Steuereinheit und die zweite Steuereinheit verwandte Aufgaben (beispielsweise jeweils einen Steuervorgang in einer Bremseinheit) wahrnehmen, und/oder wenn die ersten Nutzinformationen etwa Daten umfassen, die in der ersten Steuereinheit verwendet oder erzeugt werden, und die zweite Steuereinheit dieselben oder ähnliche Daten verwendet oder erzeugt.

Dieses Verfahren umfasst dann ein Ausbilden der zweiten Steuereinheit, um eine Bedingung festzustellen und um bei einem Vorliegen der Bedingung Ersatzinformationen unter der ersten Senderidentifikation auf dem zumindest einen Bus bereitzustellen. Dabei sind die Ersatzinformationen die ersten Nutzinformationen oder damit verknüpfte Nutzinformationen. Bezüglich der Bedingung kann die zweite Steuereinheit ausgebildet werden, um eine Abwesenheit von ersten Nutzinformationen auf dem Datenübertragungsweg zu detektieren, oder sie kann ausgebildet werden, um von der ersten Steuereinheit oder von einer weiteren Komponente des Fahrzeugs aufgefordert zu werden, die Ersatzinformationen auf dem zumindest einen Bus bereitzustellen.

Ausführungsbeispiele beziehen sich auch auf ein Speichermedium mit darauf gespeichertem Programmcode, der für eine datenverarbeitende Maschine vorgesehen und ausgebildet ist, um die datenverarbeitende Maschine zu veranlassen, eines der vorhergehend beschriebenen Verfahren durchzuführen.

Wichtige Aspekte der Sekundärsteuereinheit und des Datenkommunikationsnetzwerks lassen sich auch wie folgt zusammenfassen.

Das vorgestellte Verfahren der "gemeinsamen Nachrichtenübermittlung" dient einer Aufteilung der Verantwortung zwischen der Primärsteuereinheit und der Sekundärsteuereinheit für die Übertragung einer Nachricht mit der gleichen Senderidentifikation in einem Fahrzeug.

Im Unterschied zu Redundanzen im Stand der Technik, in denen üblicherweise die Nutzinformation selbst redundant erzeugt wird, geht es bei der vorgestellten Sekundärsteuereinheit und dem Datenkommunikationsnetzwerk vor allem um die Senderidentifikation, also die Deklaration des Sendegeräts. In herkömmlichen Redundanzlösungen sind zwei oder mehr Steuereinheiten ausgebildet, um alle Daten ausschließlich mit derselben Senderidentifikation auf dem Datenübertragungsweg bereitzustellen (beispielsweise, indem sie gemeinsam, etwa durch individuelles Bestimmen und ein Auswahlverfahren, eine Nutzinformation erzeugen und diese - eventuell über ein zwischengeschaltetes Auswahlgerät - auf einen Datenbus legen), oder es ist neben einer ersten Steuereinheit zumindest eine weitere Steuereinheit ausgebildet, um eine Nutzinformation aushilfsweise zu erzeugen und dann unter der dieser weiteren Steuereinheit eigenen Senderidentifikation auf dem Datenübertragungsweg bereitzustellen. Hingegen wird die vorhergehend beschriebene Sekundärsteuereinheit vorteilhafterweise lediglich aushilfsweise herangezogen, um im Namen (also mit der ersten Senderidentifikation) der Primärsteuereinheit Ersatzinformationen für die im Regelbetrieb von der Primärsteuereinheit bereitgestellten ersten Nutzinformation auf dem Datenübertragungsweg bereitzustellen.

Die Primärsteuereinheit und die Sekundärsteuereinheit haben vorteilhafterweise unterschiedliche Aufgaben bzw. dienen mit der Aussendung von ersten bzw. zweiten Nutzinformationen unterschiedlichen Zwecken. Primär- und Sekundärsteuereinheit können aber jeweils Teil eines Steuergeräte-Clusters mit ähnlichen oder verwandten Aufgaben (z. B. Teile eines redundanten Bremssystems oder eines redundanten Lenksystems) sein. Steuergeräte dieses Steuergeräte-Clusters können gleich ausgeführte Schnittstellen zu dem Datenübertragungsweg oder zu weiteren Steuergeräten oder Werkzeugen aufweisen.

In Ausführungsbeispielen ist die Sekundärsteuereinheit ausgebildet, um etwa in regelmäßigen Abständen zu prüfen, ob erste Nutzinformationen auf dem Datenübertragungsweg bereitgestellt werden. Die Bedingung für ein Bereitstellen von Ersatzinformationen durch die Sekundärsteuereinheit kann insbesondere ein Feststellen eines time-out der ersten Nutzinformationen auf dem Datenübertragungsweg umfassen.

Die Sekundärsteuereinheit kann auch ausgebildet sein, um ein Bereitstellen der ersten Nutzinformationen von der Primärsteuereinheit über den Datenübertragungsweg anzufordern.

In Ausführungsbeispielen ist die Primärsteuereinheit mit der Sekundärsteuereinheit optional über eine separate Datenverbindung verbunden und tauscht mit der Sekundärsteuereinheit Daten aus. Parallel dazu stellen die Primär- und die Sekundärsteuereinheit die ersten bzw. die zweiten Nutzinformationen über den Datenübertragungsweg anderen Steuergeräten wie z. B. einem Motorsteuergerät, einem Getriebesteuergerät oder auch einem Diagnosewerkzeug bereit. Bei den zwischen der Primärsteuereinheit und der Sekundärsteuereinheit ausgetauschten Daten kann es sich z. B. um eine Zustandsinformation handeln, die einen allgemeinen Gesundheitszustand der Primärsteuereinheit anzeigt. Daraus kann direkt oder indirekt für die Sekundärsteuereinheit ersichtlich sein, ob die ersten Nutzinformationen, z.B. die über ein CAN versandten Informationen für den Motor, von der Primärsteuereinheit übertragen werden, oder ob dies nicht der Fall ist. Die zwischen der Primärsteuereinheit und der Sekundärsteuereinheit ausgetauschten Informationen können auch ein explizites Signal umfassen, mit der die Sekundärsteuereinheit aufgefordert wird, mit der Übertragung der "gemeinsamen Nachricht" bzw. der Ersatzinformationen zu beginnen. Die Entscheidung, ob die Übertragung einer bestimmten Nachricht von mehreren Steuergeräten gemeinsam genutzt werden soll, kann von der Konfiguration eines Datensatzes abhängen.

Situationen, in denen die Primärsteuereinheit die ersten Nutzinformationen nicht mehr auf dem Datenübertragungsweg bereitstellt, können etwa umfassen:
- dass die Primärsteuereinheit wird nicht mehr elektrisch versorgt wird,
- dass die Primärsteuereinheit durch einen technischen Defekt nicht in der Lage ist, die ersten Nutzinformationen zu übertragen,
- dass die Primärsteuereinheit oder externe Komponenten (z.B. ein Sensor, dessen Daten die ersten Nutzinformationen bilden) sich in einem Fehlerzustand befindet bzw. befinden, der es nicht erlaubt, die benötigten Informationen, die mit der CAN-Nachricht übertragen werden, zu aktualisieren, oder
- dass die Primärsteuereinheit nicht mehr für die Aktualisierung der CAN-Nachrichteninformationen zuständig ist; insbesondere kann die Primärsteuereinheit durch einen Fehler in einer weiteren Komponente des Fahrzeugs oder auch zu einer Erhöhung einer Sicherheit des Fahrzeugs durch eine weitere Komponente veranlasst worden sein, die ersten Nutzinformationen nicht mehr bereitzustellen.

Wenn dies der Fall ist, hat die Sekundärsteuereinheit die Möglichkeit, einzugreifen und mit der Übertragung von Ersatzinformationen für die ersten Nutzinformationen zu beginnen. Die Sekundärsteuereinheit sendet die Ersatzinformationen mit der gleichen Senderidentifikation bzw. Nachrichten-ID wie die Primärsteuereinheit. Die Ersatzinformationen umfassen einen gleichen oder äquivalenten Inhalt wie die ersten Nutzinformationen, welche die Primärsteuereinheit bereitgestellt hätte.

Der Wechsel von der Primärsteuereinheit zur Sekundärsteuereinheit kann somit insbesondere erfolgen aufgrund von
- einer z.B. durch die Sekundärsteuereinheit erkannten Zeitüberschreitung der Nachricht ("time out"), und/oder
- einem angeforderten Wechsel zur Sekundärsteuereinheit (z. B. durch Austausch von Zustandsinformationen zwischen Primärsteuereinheit und Sekundärsteuereinheit).

Vorteile der Sekundärsteuereinheit bzw. des Datenkommunikationsnetzwerks, insbesondere im Vergleich zur Verteilung der gleichen Informationen auf verschiedene Nachrichten-IDs in herkömmlichen Systemen, umfassen insbesondere, dass die Sekundärsteuereinheit sich gegenüber anderen Steuergeräten im Fahrzeug zumindest teilweise wie eine bekannte bzw. nicht-redundante Komponente, nämlich wie die Primärsteuereinheit, verhält. Das vorgestellte Konzept eignet sich auch für eine Nachrüstung einer bestehenden Fahrzeugarchitektur. Die Fahrzeugarchitektur kann beispielsweise für das manuelle Fahren ausgelegt sein, soll jedoch zu Aufgaben des autonomen Fahrens verwendet werden. Das Nachrüsten umfasst dann das Ausbilden einer geeigneten Steuereinheit zur Sekundärsteuereinheit. Es verlangt lediglich minimale Änderungen auf der Hardware- und Softwareseite, und es kann den Aufwand, eine Redundanz einzuführen bzw. zu gewährleisten, etwa aus folgenden Gründen erheblich reduzieren:
- Für nicht-redundante Komponenten im System (insbesondere für zum Empfang der ersten Nutzinformationen ausgebildete Geräte) sind keine Softwareanpassungen erforderlich.
- Die neu als Redundanz dienende (die Sekundärsteuereinheit darstellende) Komponente benötigt in Ausführungsbeispielen keine Veränderung ihrer Schnittstelle zum Datenübertragungsweg bzw. zum CAN. Als Sekundärsteuergerät eignen sich somit andere Steuergeräte des Fahrzeugsystems, aber auch extern angeschlossene Tools wie Diagnosegeräte etwa für End-of-Line-Tester.

- In Ausführungsbeispielen sind keine oder nur geringe Hardware-Änderungen am Datenkommunikationsnetzwerk bzw. am CAN erforderlich.
- Eine Redundanz kann auf solche Hardware/Software innerhalb eines bestehenden Systems beschränkt werden, die für die ODD (Operational Design Domain) sicherheitsrelevant ist.
- Die Einrichtung einer Steuereinheit als Sekundärsteuereinheit bietet eine hohe Rückwärtskompatibilität von Hard- und Software für viele Komponenten im Fahrzeug, einen Vergleich von Anwendungsfällen für manuelles und vollautomatisiertes Fahren und eine Reduzierung von Produktvarianten.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt eine Sekundärsteuereinheit gemäß der vorliegenden Erfindung.
- Fig. 2: illustriert eine Funktion der Sekundärsteuereinheit.
- Fig. 3: zeigt ein Ausführungsbeispiel und illustriert Vorteile der Sekundärsteuereinheit in einem Datenkommunikationsnetzwerk.
- Fig. 4: illustriert Vorteile der Sekundärsteuereinheit in einem weiteren Datenkommunikationsnetzwerk.
- Fig. 5: zeigt Schritte eines Verfahrens für ein redundantes Bereitstellen von ersten Nutzinformationen in einem Fahrzeug.
- Fig. 6: zeigt weitere Details für ein Ausführungsbeispiel des Verfahrens.

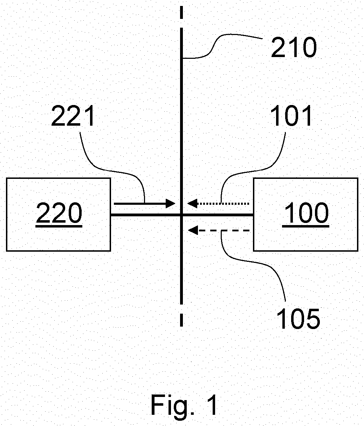

**Fig.** 1 zeigt eine Sekundärsteuereinheit 100 für ein Fahrzeug, die mit einem Datenübertragungsweg 210 des Fahrzeugs verbunden ist. Zudem auch eine Primärsteuereinheit 220 des Fahrzeugs mit dem Datenübertragungsweg 210 verbunden. Die Primärsteuereinheit 220 ist für eine erste Aufgabe vorgesehen und zu diesem Zweck ausgebildet, um erste Nutzinformationen 221 unter einer eindeutig auf die Primärsteuereinheit 220 verweisenden ersten Senderidentifikation über den Datenübertragungsweg 210 bereitzustellen. Die Sekundärsteuereinheit 100 ist für eine zweite Aufgabe vorgesehen, die vorteilhafterweise verschieden ist von der ersten Aufgabe. Die Sekundärsteuereinheit 100 ist zu diesem Zweck ausgebildet, um zweite Nutzinformationen 101 unter einer eindeutig auf die Sekundärsteuereinheit 100 verweisenden zweiten Senderidentifikation über den Datenübertragungsweg 210 bereitzustellen. Das Bereitstellen der ersten Nutzinformationen 221 und der zweiten Nutzinformationen 101 kann dabei z.B. wiederholt in vorbestimmten zeitlichen Abständen, auf Anforderung etwa durch eine weitere Komponente des Fahrzeugs (insbesondere durch Kommunikation über den Datenübertragungsweg), oder auch nach anderen Voraussetzungen erfolgen; insbesondere kann sich die Primärsteuereinheit auch von der Sekundärsteuereinheit dabei unterscheiden. Die Übertragung von Informationen über den Datenübertragungsweg 210 kann ein Priorisieren umfassen.

Die Sekundärsteuereinheit 100 ist ausgebildet, um eine Bedingung festzustellen, die einen Ausfall oder eine Unterbrechung der Bereitstellung der ersten Nutzinformationen 221 durch die Primärsteuereinheit 220 umfasst. Die Sekundärsteuereinheit 100 ist weiter dazu ausgebildet, um bei Vorliegen der Bedingung Ersatzinformationen 105 unter der ersten Senderidentifikation über den Datenübertragungsweg 210 bereitzustellen. Die Ersatzinformationen 105 sind als Ersatz für die ersten Nutzinformationen 221 bestimmt. Sie sind entweder die ersten Nutzinformationen 221 selbst (bzw. diejenigen Informationen, die auch die Primärsteuereinheit 220 als erste Nutzinformationen 221 ausgesendet haben müsste), oder sie stellen damit verknüpfte Nutzinformationen, etwa vergleichbare Messwerte oder die ersten Nutzinformationen 221 approximierende Informationen, dar.

In Ausführungsbeispielen ist vorgesehen, dass die Primärsteuereinheit ausgebildet ist, weitere Ersatzinformationen für die zweiten Nutzinformationen auf dem Datenübertragungsweg bereitzustellen; es kann also insbesondere eine wechselseitige Aufgabenübernahme entsprechend einem Ausfall der Primärsteuereinheit oder der Sekundärsteuereinheit erfolgen. Auch ein Einbeziehen weiterer Steuereinheiten ist möglich.

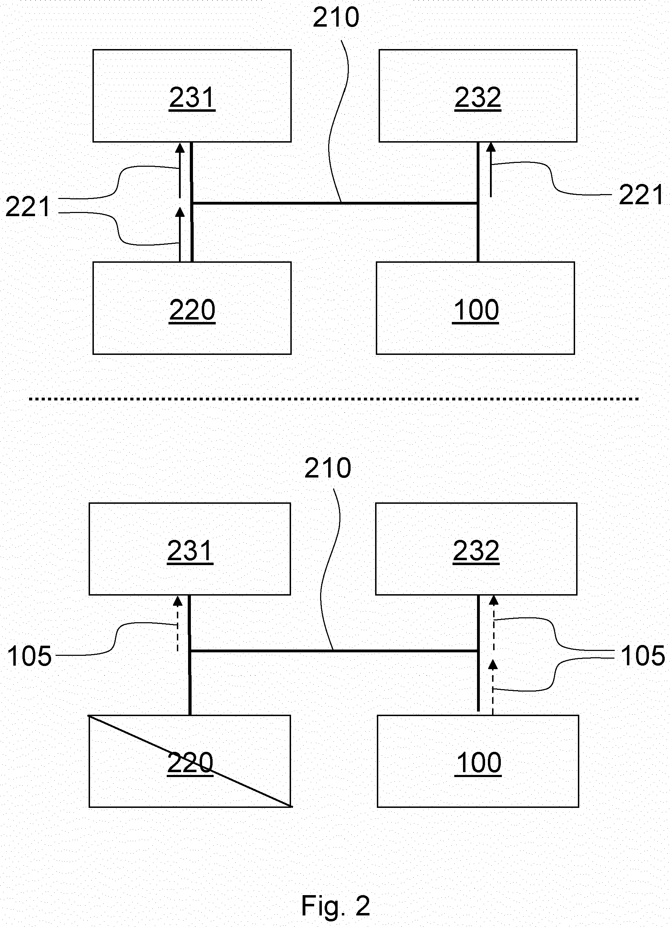

**Fig.** 2 illustriert eine Funktionsweise der Sekundärsteuereinheit 100. In einem oberen Teil der Figur ist eine Betriebssituation dargestellt, in der die Primärsteuereinheit 220 die ersten Nutzinformationen 221 unter der ersten Senderidentifikation auf dem Datenübertragungsweg 210 bereitstellt. Die ersten Nutzinformationen 221 werden von einem ersten Empfangsgerät 231 und von einem zweiten Empfangsgerät 232 über den Datenübertragungsweg 210 empfangen. Das erste Empfangsgerät 231 und das zweite Empfangsgerät 232 wählen Informationen auf dem Datenübertragungsweg 210 anhand einer Senderidentifikation aus. Eine Übertragung auf dem Datenübertragungsweg 210 kann einer Priorisierung unterliegen, die von der ersten Senderidentifikation abhängt.

In einem unteren Teil der Figur fällt die Primärsteuereinheit 220 für das Bereitstellen der ersten Nutzinformationen 221 auf dem Datenübertragungsweg 210 aus. Die Sekundärsteuereinheit 100 hat eine Bedingung festgestellt, die sie zu einem Versenden von Ersatzinformationen 105 für die ersten Nutzinformationen 221 veranlasst. Dargestellt ist das Bereitstellen der Ersatzinformationen 105 auf dem Datenübertragungsweg 210 unter der ersten Senderidentifikation durch die Sekundärsteuereinheit 100.

Bei der Bedingung kann es sich beispielsweise um eine Aufforderung, etwa durch die Primärsteuereinheit 220 oder durch eine weitere Komponente des Fahrzeugs, handeln. Je nach Ausführungsbeispiel kann die Aufforderung die Sekundärsteuereinheit 100 über den Datenübertragungsweg 210 und/oder über eine separate Datenverbindung erreicht haben. Die Bedingung kann jedoch auch umfassen, dass die ersten Nutzinformationen aufgrund des Ausfalls der Primärsteuereinheit 220 für eine bestimmte Zeit nicht mehr auf dem Datenübertragungsweg 210 bereitgestellt worden sind. Die Sekundärsteuereinheit 100 kann ausgebildet sein, um dies als Bedingung oder als Teil der Bedingung festzustellen, und um beispielsweise nach einer bestimmten Zeit mit dem Bereitstellen der Ersatzinformationen 105 zu beginnen. Weiter kann die Bedingung zumindest teilweise auf einer Funktionsdiagnose der Primärsteuereinheit 220 beruhen. So können die Primärsteuereinheit 220 und die Sekundärsteuereinheit 100 beispielsweise ausgebildet sein, um Informationen über eine Funktionstüchtigkeit der Primärsteuereinheit 220 an die Sekundärsteuereinheit 100 zu übertragen. Dies kann über den Datenübertragungsweg 210 oder auch über eine separate Datenverbindung zwischen der Primärsteuereinheit 220 und der Sekundärsteuereinheit 100 erfolgen.

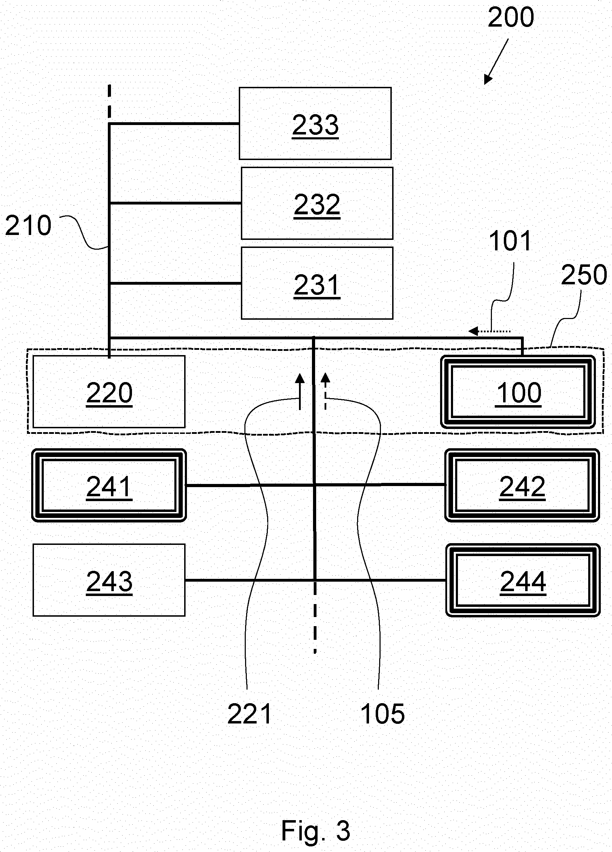

**Fig.** 3 zeigt ein Ausführungsbeispiel und illustriert Vorteile der Sekundärsteuereinheit 100, bzw. einer Implementierung einer Redundanz durch die Sekundärsteuereinheit 100, in einem Datenkommunikationsnetzwerk 200. Das Datenkommunikationsnetzwerk 200 kann beispielsweise ein CAN oder ein CAN-FD sein.

Der Datenübertragungsweg 210 ist hier ein Bus, über den Informationen aus mehreren Steuergeräten 100, 220, 241, 242, 243, 244 in Form von Datenrahmen bereitgestellt werden. Die Datenrahmen weisen jeweils eine Senderidentifikation bzw. ein ID-Feld auf. Die Senderidentifikation ordnet die Information bzw. den Datenrahmen grundsätzlich derjenigen Steuereinheit 100, 220, 241, 242, 243, 244 zu, die den Datenrahmen auf dem Bus 210 bereitgestellt hat.

Die Steuereinheiten 100, 220, 241, 242, 243, 244 umfassen die Primärsteuereinheit 220, die etwa eine erste Bremssteuereinheit sein kann, und die Sekundärsteuereinheit 100, die etwa eine zweite Bremssteuereinheit sein kann. Als weitere Steuereinheiten umfasst dieses Ausführungsbeispiel eine erste Steuereinheit für autonomes Fahren 241 und eine zweite Steuereinheit für autonomes Fahren 242 sowie eine erste Lenksteuereinheit 243 und eine zweite Lenksteuereinheit 244. Dabei können die Steuereinheiten 100, 220, 241, 242, 243, 244 in einem ähnlichen Aufgabenbereich auch jeweils wechselseitig als Primärsteuereinheit und als Sekundärsteuereinheit im hier vorgestellten Sinn eingerichtet sein. Die Sekundärsteuereinheit 100, die Steuereinheiten für autonomes Fahren 242, 243 und die zweite Lenksteuereinheit 244 können dabei auch bereits im Hinblick auf ein autonomes Fahren, etwa durch ein lediglich teilweise erfolgtes Nachrüsten, eingeführt worden sein.

Die Primärsteuereinheit 220 und die Sekundärsteuereinheit 100 bilden in diesem Ausführungsbeispiel einen Steuercluster 250, übernehmen also ähnliche Aufgaben. Beispielsweise kann die Primärsteuereinheit 220 zur Steuerung eines Bremsaktuators für ein erstes Rad des Fahrzeugs und die Sekundärsteuereinheit 100 zur Steuerung eines Bremsaktuators für ein zweites Rad des Fahrzeugs eingerichtet sein. Das erste Rad und das zweite Rad und/oder der Bremsaktuator für das erste Rad und der Bremsaktuator für das zweite Rad können auch identisch sein.

Bei den ersten Nutzinformationen 221 kann es sich beispielsweise um fortlaufend aktualisierte Drehzahlen des ersten Rads handeln, welche die Primärsteuereinheit 220 von einem entsprechend ausgebildeten ersten Drehzahlsensor empfängt. Die Primärsteuereinheit 220 kann zudem selbst eine Funktion basierend auf den Drehzahlen des ersten Drehzahlsensors ausführen.

Bei den zweiten Nutzinformationen 101 kann es sich beispielsweise um fortlaufend aktualisierte Drehzahlen des zweiten Rads handeln, welche die Sekundärsteuereinheit 100 von einem entsprechend ausgebildeten zweiten Drehzahlsensor empfängt. Die Sekundärsteuereinheit 100 kann zudem selbst eine Funktion basierend auf den Drehzahlen des zweiten Drehzahlsensors ausführen.

Die Primärsteuereinheit 220 ist ausgebildet, um die Drehzahlen des ersten Drehzahlsensors als erste Nutzinformationen 221 unter der ersten Senderidentifikation auf dem Bus 210 bereitzustellen. Die Senderidentifikation legt gleichzeitig eine Priorisierung (zur Bestimmung einer Reihenfolge bei Informationen, die zeitlich kollidierend auf dem Bus 210 bereitgestellt werden sollen) für die ersten Nutzinformationen 221 fest.

An dem Bus 210 sind weitere Einrichtungen 231, 232, 233 angeschlossen, die jeweils für eine Funktion vorgesehen sind, für die sie Informationen über Drehzahlen benötigen. In dem vorliegenden Ausführungsbeispiel handelt es sich dabei um eine Motoreinrichtung 231 des Fahrzeugs, um eine Gangschaltungseinrichtung 232 des Fahrzeugs und um ein Diagnosegerät 233. Die Einrichtungen 231, 232, 233 sind ausgebildet, um die ersten Nutzinformationen 221, und somit die Drehzahlen, über den Bus 210 zu empfangen. Dabei können die Einrichtungen 231, 232, 233 insbesondere ausgebildet sein, um die ersten Nutzinformationen 221 basierend auf der ersten Senderidentifikation zu erkennen und zu empfangen, in allen Geräten am Bus 210, insbesondere jedoch in den Einrichtungen 231, 232, 233, kann folglich für Datenrahmen auf dem Bus 210 jeweils zumindest ein Empfang der Senderidentifikation und eine Arbitrierung stattfinden.

Das Bereitstellen der Ersatzinformationen 105 unter der ersten Senderidentifikation durch die Sekundärsteuereinheit 100 lässt die Vorgänge sowohl der Priorisierung als auch der Arbitrierung unverändert. Die Ersatzinformationen 105 werden somit bezüglich ihrer Versendung über den Bus 210 in jeder Hinsicht so behandelt, als wären sie von der Primärsteuereinheit 220 bereitgestellt worden.

Ein Einrichten bzw. Ausbilden einer Steuereinheit zu einer Sekundärsteuereinheit 100 der hier vorgestellten Art bietet somit insbesondere dann einen Vorteil, wenn eine Redundanz in einem bereits bestehenden CAN erzeugt werden soll und geeignete Steuereinheiten zur Verfügung stehen, um als Primärsteuereinheit 220 und als Sekundärsteuereinheit 100 zu dienen. Das Ausbilden kann insbesondere ein Umprogrammieren einer dieser Steuereinheiten zu den Aufgaben der Sekundärsteuereinheit 100 umfassen. Der Bus 210, aber auch die weiteren Einrichtungen 231, 232, 233 benötigen in Ausführungsbeispielen keine oder nur eine geringfügige Anpassung; beispielsweise kann etwa eine bestehende Motor- und/oder Getriebesoftware beibehalten werden.

Basierend auf diesem Ausführungsbeispiel lässt sich eine Funktion der Sekundärsteuereinheit 100 anhand des folgenden Beispielszenarios erläutern: Die Primärsteuereinheit 220 und die Sekundärsteuereinheit 100, zwei indviduelle Bremssteuergeräte, sind an einen öffentlichen CAN-Bus 210 angeschlossen und/oder über eine private CAN-Leitung miteinander verbunden und tauschen Daten über ihren Zustand aus. Die Primärsteuereinheit 220 sendet erste Nutzinformationen 221 über die Radgeschwindigkeit an den öffentlichen CAN-Bus 210, die von der Getriebeeinrichtung 232 verwendet werden, um Entscheidungen über eine Gangwahl zu treffen. Plötzlich sind die Informationen des Raddrehzahlsensors für die Primärsteuereinheit 220 aufgrund eines elektrischen Verbindungsproblems mit einem Raddrehzahlsensor nicht mehr verfügbar. Das Problem verschlechtert den Gesundheitszustand des primären Bremssystems und stoppt die Übertragung der Raddrehzahlinformationen auf dem öffentlichen CAN-Bus 210. Die Sekundärsteuereinheit 100 wird über die private CAN-Leitung informiert. Da die Übertragung der Raddrehzahlinformationen so konfiguriert ist, dass sie von der Primärsteuereinheit 220 und der Sekundärsteuereinheit 100 gemeinsam genutzt wird, und eine redundante Verbindung der Sekundärsteuereinheit 100 mit demselben Raddrehzahlsensor besteht, wird die Übertragung der Raddrehzahlinformationen von der Sekundärsteuereinheit 100 sofort mit derselben Senderidentifikation fortgesetzt, wie sie die Primärsteuereinheit 220 zuvor verwendet hat.

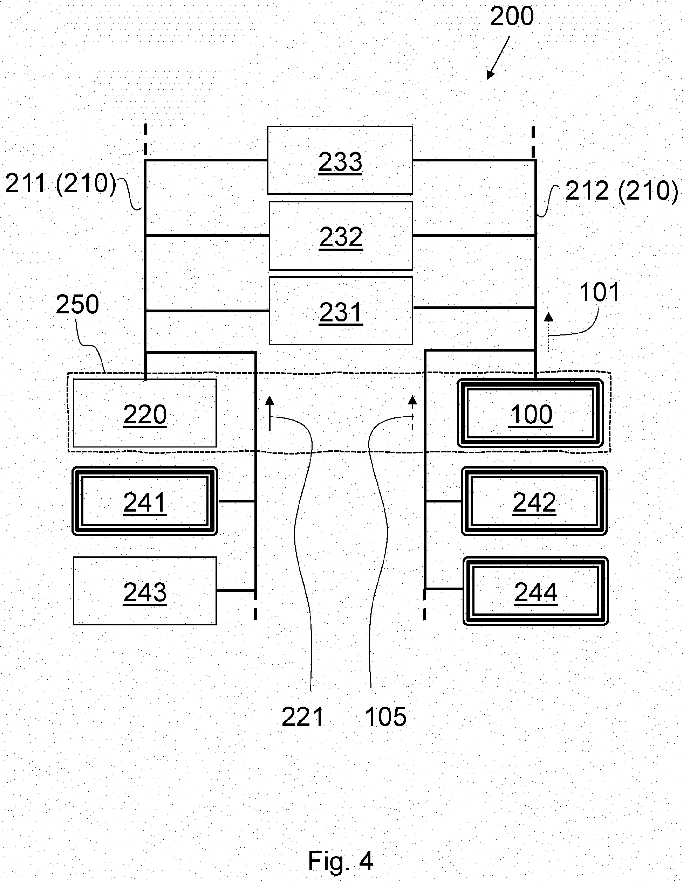

**Fig.** 4 illustriert Vorteile der Sekundärsteuereinheit 100 in einem weiteren Datenkommunikationsnetzwerk 200. In diesem Datenkommunikationsnetzwerk 200 bestehen zwei getrennte Busse 211, 212. Die hier dargestellte Architektur kann insbesondere in einem bereits für ein autonomes Fahren ausgebildeten Fahrzeug auftreten.

An einem ersten Bus 211 sind die Primärsteuereinheit 220 (beispielsweise eine erste elektronische Kontrolleinheit einer Bremseinrichtung), eine primäre autonome Fahrsteuereinheit 241 und eine primäre Lenksteuereinheit 243 angeschlossen. An einem zweiten Bus 212 sind die Sekundärsteuereinheit 100 (beispielsweise ebenfalls eine elektronische Kontrolleinheit einer Bremseinrichtung), eine sekundäre autonome Fahrsteuereinheit 242 und eine sekundäre Lenksteuereinheit 244 angeschlossen. Beide Busse 211, 212 weisen zudem jeweils Anschlüsse zu einer Motoreinrichtung 231, einer Gangschaltungseinrichtung 232 und zu einem Diagnosegerät 233 auf. Diese Einrichtungen 231, 232, 233 sind jeweils an beide Busse 211, 212 angeschlossen.

Herkömmliche Systeme mit einem zu diesem Ausführungsbeispiel analogen Aufbau sehen vor, dass jede Steuereinheit Informationen mit einer eigenen Senderidentifikation auf dem jeweiligen Bus bereitstellt. Auch in einem solchen System kann sich jedoch ein Ausbilden von Merkmalen der vorgestellten Sekundärsteuereinheit 100, etwa im Rahmen einer Nach- oder Aufrüstung des Systems, von Vorteil erweisen: Durch das Bereitstellen der Ersatzinformationen 105 unter der ersten Senderidentifikation können die Ersatzinformationen 105 auch innerhalb der zu ihrem Empfang ausgebildeten Einrichtungen 231, 232, 233 gleich behandelt werden wie die ersten Nutzinformationen 221. Zudem bietet sich auch hier der Vorteil, dass bezüglich Priorisierung und Arbitrierung die Ersatzinformationen 105 gleich wie die ersten Nutzinformationen 221 behandelt werden.

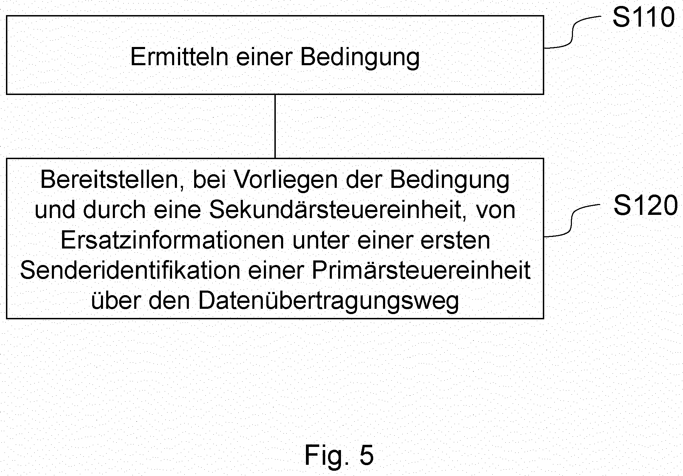

Fig. 5 zeigt Schritte eines Verfahrens für ein redundantes Bereitstellen von ersten Nutzinformationen 221 in einem Fahrzeug. Das Fahrzeug umfasst einen Datenübertragungsweg 210 (etwa einen Bus), eine Primärsteuereinheit 220, die ausgebildet ist, um die ersten Nutzinformationen 221 unter einer eindeutig auf die Primärsteuereinheit 220 verweisenden ersten Senderidentifikation über den Datenübertragungsweg 210 bereitzustellen, und eine Sekundärsteuereinheit 100, die ausgebildet ist, um zweite Nutzinformationen 101 unter einer eindeutig auf die Sekundärsteuereinheit 100 verweisenden zweiten Senderidentifikation über den Datenübertragungsweg 210 bereitzustellen.

Das Verfahren umfasst ein Ermitteln S110 einer Bedingung durch die Sekundärsteuereinheit 100, sowie bei Vorliegen der Bedingung ein Bereitstellen S120 von Ersatzinformationen 105 unter der ersten Senderidentifikation über den Datenübertragungsweg 210 durch die Sekundärsteuereinheit 100, wobei die Ersatzinformationen 105 die ersten Nutzinformationen 221 oder damit verknüpfte Informationen sind.

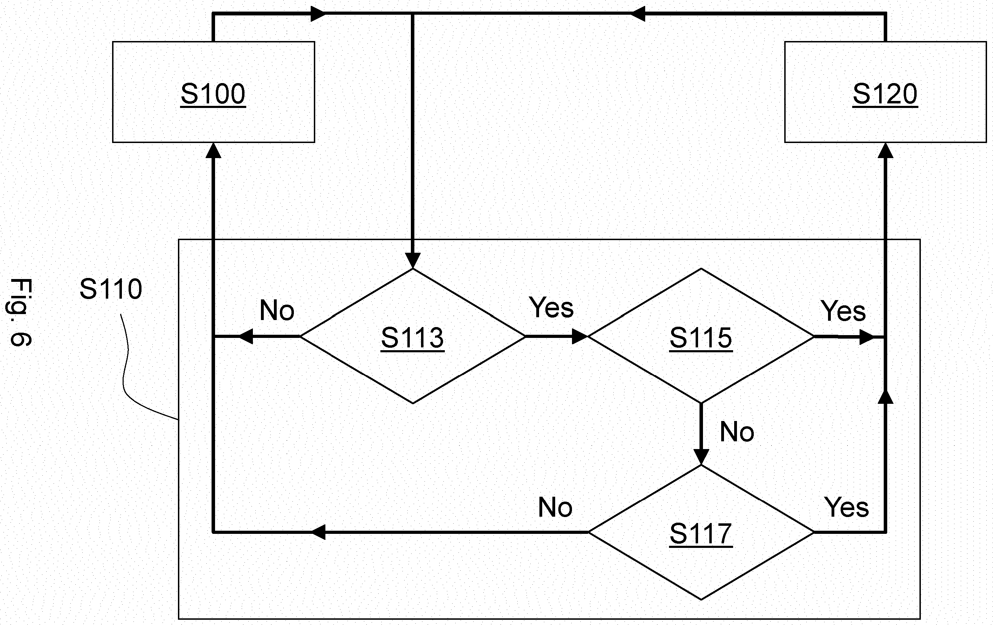

Fig. 6 zeigt weitere Details für ein Ausführungsbeispiel des Verfahrens aus Fig. 5. Hier sind insbesondere Teile des Ermittelns S110 der Bedingung detaillierter dargestellt.

In einem Normal- oder Regelbetrieb erfolgt ein Bereitstellen S100 einer ersten Nutzinformation 221 auf dem Datenübertragungsweg 210 durch die Primärsteuereinheit 220. Auf dem Datenübertragungsweg 210 werden in einer seriellen, durch eine Priorisierung festgelegten Abfolge die ersten Nutzinformationen 221 sowie eine Vielzahl von Informationen von weiteren Steuergeräten 100, 241, 242, 243, 244 unter ihren jeweiligen Senderidentifikationen bereitgestellt.

Zum Ermitteln S110 der Bedingung erfolgt in diesem Ausführungsbeispiel zunächst ein erstes Entscheiden S113, ob erste Nutzinformationen 221 überhaupt festgelegt bzw. definiert sind, ob also für eine oder mehrere Information aus der Primärsteuereinheit 220 vorgesehen ist, dass sie durch die Sekundärsteuereinheit 100 gegebenenfalls zu ersetzen sind. Eine solche Festlegung kann beispielsweise zuvor in einem Datensatz erfolgen; jedoch können zu ersetzende erste Nutzinformationen 221 auch auf andere Weise bestimmt sein. Die Primärsteuereinheit 220 kann ausgebildet sein, um neben den ersten Nutzinformationen 221 auch andere Informationen über den Datenübertragungsweg 210 bereitzustellen, die nicht zu ersetzen sind. Das Entscheiden S113 kann ein Prüfen der Senderidentifikation der Information umfassen.

Sind erste Nutzinformationen 221 definiert, so erfolgt in diesem Ausführungsbeispiel ein Feststellen S115, ob die ersten Nutzinformation S221 bereits für eine bestimmte Zeit nicht mehr über den Datenübertragungsweg 210 bereitgestellt worden sind (time-out). Dies kann beispielsweise darauf zurückzuführen sein, dass die Primärsteuereinheit 220 die ersten Nutzinformationen 221 gar nicht versendet oder das Bereitstellen S100 der ersten Nutzinformationen 221 eingestellt hat. Liegt ein time-out vor, gilt die Bedingung als vorliegend, und es erfolgt das Bereitstellen von Ersatzinformationen 105 durch die Sekundärsteuereinheit 100.

Liegt hingegen kein time-out vor, so erfolgt ein weiteres Entscheiden S117, ob eine Aufforderung an die Sekundärsteuereinheit 100 zum Bereitstellen der Ersatzinformationen 105 vorliegt. Ist dies der Fall, erfolgt das Bereitstellen von Ersatzinformationen 105 durch die Sekundärsteuereinheit 100. Ist es nicht der Fall, kann vorgesehen sein, die ersten Nutzinformationen 221 zum Zweck des Ermittelns S110 der Bedingung für eine bestimmte Zeit nicht mehr zu verfolgen.

Beispielsweise kann für das hier dargestellte Ausführungsbeispiel die Primärsteuereinheit 220 aufgrund einer Fehlfunktion von Anfang an nicht mit Strom versorgt sein, die Sekundärsteuereinheit 100 ein Fehlen der Information auf dem CAN-Bus erkennen und daraufhin unter der Senderidentifikation der Primärsteuereinheit 100 die Ersatzinformationen 105 versenden.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### BEZUGSZEICHENLISTE

- 100: Sekundärsteuereinheit
- 101: zweite Nutzinformationen
- 105: Ersatzinformationen
- 210, 211, 212: Datenübertragungsweg / (Daten-)Busse
- 220: Primärsteuereinheit
- 221: erste Nutzinformationen
- 231 - 233, 241 - 244: weitere durch den Datenübertragungsweg verbundene Geräte
- 250: Steuercluster
- S110, S113, S115, S117, S120: Schritte eines Verfahrens

## Patentansprüche

1. Eine Sekundärsteuereinheit (100) für ein Fahrzeug mit einer
Primärsteuereinheit (220) und einem Datenübertragungsweg (210), wobei die Primärsteuereinheit (220) ausgebildet ist, um erste Nutzinformationen (221) unter einer eindeutig auf die Primärsteuereinheit (220) verweisenden ersten Senderidentifikation über den Datenübertragungsweg (210) bereitzustellen,
**dadurch gekennzeichnet, dass**
die Sekundärsteuereinheit (100) ausgebildet ist, um:
- zweite Nutzinformationen (101) unter einer eindeutig auf die Sekundärsteuereinheit (100) verweisenden zweiten Senderidentifikation über den Datenübertragungsweg (210) bereitzustellen,
- eine Bedingung festzustellen und
- bei Vorliegen der Bedingung Ersatzinformationen (105) nicht mit ihrer eigenen Senderidentifikation, sondern unter der ersten Senderidentifikation der Primärsteuereinheit (220) über den Datenübertragungsweg (210) bereitzustellen, wobei die Ersatzinformationen (105) die ersten Nutzinformationen (221) oder damit verknüpfte Nutzinformationen sind, und wobei die Sekundärsteuereinheit die Ersatzinformationen (105) im Namen der Primärsteuereinheit (220) bereitstellt.

2. Die Sekundärsteuereinheit (100) nach Anspruch 1, wobei
die Primärsteuereinheit (220) ausgebildet ist, um erste Auslöseinformationen zu empfangen und darauf basierend die ersten Nutzinformationen (221) zu erzeugen, **dadurch gekennzeichnet dass**
die Sekundärsteuereinheit (100) ausgebildet ist, um zweite Auslöseinformationen zu empfangen und darauf basierend die Ersatzinformationen (105) zu erzeugen.

3. Die Sekundärsteuereinheit (100) nach einem der vorhergehenden Ansprüche, **dadurch gekennzeichnet, dass**
die Sekundärsteuereinheit (100) ausgebildet ist, um unter der ersten Senderidentifikation über den Datenübertragungsweg (210) bereitgestellte erste Nutzinformationen (221) zu detektieren, und
wobei die Bedingung auf einer Abwesenheit von unter der ersten Senderidentifikation über den Datenübertragungsweg (210) bereitgestellten ersten Nutzinformationen (221) basiert.

4. Die Sekundärsteuereinheit (100) nach einem der vorhergehenden Ansprüche, **dadurch gekennzeichnet, dass**
die Sekundärsteuereinheit (100) eine separate Datenverbindung zu der Primärsteuereinheit (220) aufweist und ausgebildet ist, um ein Signal von der Primärsteuereinheit (220) über die separate Datenverbindung zu empfangen, wobei die Bedingung auf einem Empfangen des Signals durch die Sekundärsteuereinheit (100) basiert.

5. Die Sekundärsteuereinheit (100) nach einem der vorhergehenden Ansprüche, **dadurch gekennzeichnet, dass**
der Datenübertragungsweg (210) zumindest einen Bus (210, 211, 212) umfasst.

6. Die Sekundärsteuereinheit (100) nach Anspruch 5,
**dadurch gekennzeichnet, dass**
die erste Senderidentifikation und die zweite Senderidentifikation jeweils zumindest einen Teil eines Identifizierungsfelds nach einem Busprotokoll umfassen.

7. Ein Datenkommunikationsnetzwerk (200) für ein Fahrzeug, das Datenkommunikationsnetzwerk (200) umfasst:
zumindest einen Bus (210, 211, 212); und
eine Primärsteuereinheit (220), die ausgebildet ist, um erste Nutzinformationen (221) unter einer eindeutig auf die Primärsteuereinheit (220) verweisenden ersten Senderidentifikation auf dem zumindest einen Bus (210, 211, 212) bereitzustellen,
**dadurch gekennzeichnet, dass**
das Datenkommunikationsnetzwerk (200) eine Sekundärsteuereinheit (100), ausgebildet nach Anspruch 5 oder nach Anspruch 6, umfasst.

8. Das Datenkommunikationsnetzwerk (200) nach Anspruch 7,
**dadurch gekennzeichnet, dass**
die Primärsteuereinheit (220) eine elektronische Kontrolleinheit für eine erste Bremseinheit des Fahrzeugs und die Sekundärsteuereinheit (100) eine elektronische Kontrolleinheit für eine zweite Bremseinheit des Fahrzeugs ist.

9. Das Datenkommunikationsnetzwerk (200) nach Anspruch 7 oder Anspruch 8, soweit rückbezogen auf Anspruch 2,
**dadurch gekennzeichnet, dass**
die ersten Auslöseinformationen Messwerte eines ersten Drehzahlsensors und die zweiten Auslöseinformationen Messwerte eines zweiten Drehzahlsensors sind, wobei
- der erste Drehzahlsensor von dem zweiten Drehzahlsensor verschieden ist oder
- der erste Drehzahlsensor mit dem zweiten Drehzahlsensor identisch ist.

10. Das Datenkommunikationsnetzwerk nach einem der Ansprüche 7 bis 9, **dadurch gekennzeichnet, dass**
die Bedingung eines der folgenden umfasst:
- einen internen Fehler in der Primärsteuereinheit (220),
- einen Ausfall einer Energieversorgung der Primärsteuereinheit (220),
- einen Fehler in einer Ansteuerung der Primärsteuereinheit (220).
- einen Ausfall eines Sensors, der ausgebildet ist, um an die Primärsteuereinheit Messdaten zum Erzeugen der ersten Nutzinformation zu senden.

11. Ein Nutzfahrzeug,
**gekennzeichnet durch**
Datenkommunikationsnetzwerk (200) nach einem der Ansprüche 7 bis 10.

12. Ein Verfahren für ein redundantes Bereitstellen von ersten
Nutzinformationen (221) in einem Fahrzeug, das Fahrzeug umfasst einen Datenübertragungsweg (210), eine Primärsteuereinheit (220), die ausgebildet ist, um die ersten Nutzinformationen (221) unter einer eindeutig auf die Primärsteuereinheit (220) verweisenden ersten Senderidentifikation über den Datenübertragungsweg (210) bereitzustellen, und eine Sekundärsteuereinheit (100), die ausgebildet ist, um zweite Nutzinformationen (101) unter einer eindeutig auf die Sekundärsteuereinheit (100) verweisenden zweiten Senderidentifikation über den Datenübertragungsweg (210) bereitzustellen, das Verfahren ist
**gekennzeichnet durch:**
Ermitteln (S110) einer Bedingung;
Bereitstellen (S120), bei Vorliegen der Bedingung und durch die Sekundärsteuereinheit (100), von Ersatzinformationen (105) nicht mit einer eigenen Senderidentifikation der Sekundärsteuereinheit (100), sondern unter der ersten Senderidentifikation der Primärsteuereinheit (220) über den Datenübertragungsweg (210), wobei die Ersatzinformationen (105) die ersten Nutzinformationen (221) oder damit verknüpfte Nutzinformationen sind, und wobei die Ersatzinformationen (105) im Namen der Primärsteuereinheit (220) bereitstellt werden.

13. Ein Verfahren zum Einrichten einer Redundanz in einem Datenkommunikationsnetzwerk (200) eines Fahrzeugs, wobei das Datenkommunikationsnetzwerk (200) zumindest einen Bus (210, 211, 212) sowie eine Primärsteuereinheit (220) und eine Sekundärsteuereinheit (100) umfasst, und wobei die Primärsteuereinheit (220) ausgebildet ist, um erste Nutzerdaten (221) unter einer eindeutig auf die Primärsteuereinheit (220) verweisenden ersten Senderidentifikation über den zumindest einen Bus (210, 211, 212) bereitzustellen, und wobei die Sekundärsteuereinheit (100) ausgebildet ist, um zweite Nutzerdaten (101) unter einer eindeutig auf die Sekundärsteuereinheit (100) verweisenden zweiten Senderidentifikation über den zumindest einen Bus (210, 211, 212) bereitzustellen, das Verfahren ist
**gekennzeichnet durch:**
Ausbilden der Sekundärsteuereinheit (100), um eine Bedingung festzustellen und bei einem Vorliegen der Bedingung Ersatzinformationen (105) nicht mit einer eigenen Senderidentifikation der Sekundärsteuereinheit (100), sondern unter der ersten Senderidentifikation der Primärsteuereinheit (220) über den zumindest einen Bus (210, 211, 212) bereitzustellen, wobei die Ersatzinformationen (105) die ersten Nutzinformationen (221) oder damit verknüpfte Nutzinformationen sind, und wobei die Sekundärsteuereinheit die Ersatzinformationen (105) im Namen der Primärsteuereinheit (220) bereitstellt.

14. Ein computerlesbares Speichermedium, umfassend Befehle, die eine datenverarbeitende Maschine dazu veranlassen, das Verfahren nach Anspruch 12 oder das Verfahren nach Anspruch 13 durchzuführen.

## Claims

1. A secondary control unit (100) for a vehicle with a primary control unit (220) and a data transmission path (210), wherein the primary control unit (220) is configured to provide first payloads (221) via the data transmission path (210) under a first sender identifier uniquely referring to the primary control unit (220),
**characterized in that**
the secondary control unit (100) is configured to:
- provide second payloads (101), under a second sender identifier uniquely referring to the secondary control unit (100), via the data transmission path (210),
- verify a condition, and
- if the condition is present, provide substitute payloads (105) via the data transmission path (210), not with its own sender identifier, but under the first sender identifier of the primary control unit (220), wherein the substitute payloads (105) are the first payloads (221) or payloads related thereto, and wherein the secondary control unit provides the substitute payloads (105) on behalf of the primary control unit (220).

2. The secondary control unit (100) according to claim 1, wherein the primary control unit (220) is configured to receive first triggering information and to generate the first payloads (221) based thereon,
**characterized in that**
the secondary control unit (100) is configured to receive second triggering information and to generate the substitute payloads (105) based thereon.

3. The secondary control unit (100) according to any one of the preceding claims,
**characterized in that**
the secondary control unit (100) is configured to detect first payloads (221) provided under the first sender identifier via the data transmission path (210), and
wherein the condition is based on an absence of first payloads (221) provided under the first sender identifier via the data transmission path (210).

4. The secondary control unit (100) according to any one of the preceding claims,
**characterized in that**
the secondary control unit (100) has a separate data connection to the primary control unit (220) and is configured to receive a signal from the primary control unit (220) via the separate data connection, wherein the condition is based on a reception of the signal by the secondary control unit (100).

5. The secondary control unit (100) according to any one of the preceding claims,
**characterized in that**
the data transmission path (210) comprises at least one bus (210, 211, 212).

6. The secondary control unit (100) according to claim 5,
**characterized in that**
the first sender identifier and the second sender identifier each comprise at least part of an identifier field according to a bus protocol.

7. A data communication network (200) for a vehicle, the data communication network (200) comprising:
at least one bus (210, 211, 212); and
a primary control unit (220) configured to provide first payloads (221) on the at least one bus (210, 211, 212) under a first sender identifier uniquely referring to the primary control unit (220),
**characterized in that**
the data communication network (220) comprises a secondary control unit (100) configured according to claim 5 or according to claim 6.

8. The data communication network (200) according to claim 7,
**characterized in that**
the primary control unit (220) is an electronic control unit for a first brake unit of the vehicle and the secondary control unit (100) is an electronic control unit for a second brake unit of the vehicle.

9. The data communication network (200) according to claim 7 or claim 8, when referred back to claim 2,
**characterized in that**
the first triggering information are measured values of a first wheel speed sensor and the second triggering information are measured values of a second wheel speed sensor, wherein
- the first wheel speed sensor is different from the second speed sensor, or
- the first wheel speed sensor is identical to the second speed sensor.

10. The data communication network according to any one of claims 7 to 9,
**characterized in that**
the condition comprises one of the following:
- an internal error in the primary control unit (220),
- a failure of a power supply to the primary control unit (220),
- an error in a control of the primary control unit (220).
- a failure of a sensor configured to send measurement data to the primary control unit to generate the first payloads.

11. A commercial vehicle,
**characterized by**
the data communication network (200) according to any one of claims 7 to 10.

12. A method for redundantly providing first payloads (221) in a vehicle, the vehicle comprising a data transmission path (210), a primary control unit (220) configured to provide the first payloads (221) under a first sender identifier uniquely referring to the primary control unit (220) via the data transmission path (210), and a secondary control unit (100) configured to provide second payloads (101) under a second sender identifier uniquely referring to the secondary control unit (100) via the data transmission path (210) the method being
**characterized by**:
determining (S110) a condition;
providing (S120), if the condition is present, and by the secondary control unit (100), substitute payloads (105) not with the secondary control unit's (100) own sender identifier but under the first sender identifier of the primary control unit (220) via the data transmission path (210), wherein the substitute payloads (105) are the first payloads (221) or payloads related thereto, and wherein the substitute payloads (105) are provided on behalf of the primary control unit (220).

13. A method for setting up redundancy in a data communication network (200) of a vehicle, wherein the data communication network (200) comprises at least one bus (210, 211, 212) as well as a first control unit (220) and a second control unit (100), and wherein the first control unit (220) is configured to provide first payloads (221) via the at least one bus (210, 211, 212) under a first sender identifier uniquely referring to the first control unit (220), and wherein the second control unit (100) is configured to provide second payloads (101) via the at least one bus (210, 211, 212) under a second sender identifier uniquely referring to the second control unit (100), the method being **characterized by**:
configuring the second control unit (100) to verify a condition, and, if the condition is present, to provide substitute payloads (105), not with the second control unit's (100) own sender identifier, but under the first sender identifier of the first control unit (220) via the at least one bus (210, 211, 212), wherein the substitute payloads (105) are the first payloads (221) or payloads related thereto, and wherein the second control unit provides the substitute payloads (105) on behalf of the first control unit (220).

14. A computer readable storage medium comprising instructions that cause a data processing machine to perform the method of claim 12 or the method of claim 13.

## Revendications

1. Unité de commande secondaire (100) pour un véhicule avec une unité de commande primaire (220) et une voie de transmission de données (210), dans laquelle l'unité de commande primaire (220) est conçue pour fournir de premières informations utiles (221) par l'intermédiaire du canal de transmission de données (210) sous une première identification d'émetteur se référant de manière univoque à l'unité de commande primaire (220),
**caractérisée en ce que**
l'unité de commande secondaire (100) est conçue pour :
- fournir de secondes informations utiles (101) sous une seconde identification d'émetteur se référant de manière univoque à l'unité de commande secondaire (100) par l'intermédiaire du canal de transmission de données (210),
- déterminer une condition et
- en présence de la condition, fournir des informations de remplacement (105) non pas avec sa propre identification d'émetteur, mais sous la première identification d'émetteur de l'unité de commande primaire (220) par l'intermédiaire du canal de transmission de données (210), dans laquelle les informations de remplacement (105) sont les premières informations utiles (221) ou des informations utiles y étant associées, et dans laquelle l'unité de commande secondaire fournit les informations de remplacement (105) au nom de l'unité de commande primaire (220).

2. Unité de commande secondaire (100) selon la revendication 1, dans laquelle l'unité de commande primaire (220) est conçue pour recevoir de premières informations de déclenchement et, sur cette base, pour générer les premières informations utiles (221),
**caractérisée en ce que**
l'unité de commande secondaire (100) est conçue pour recevoir de secondes informations de déclenchement et, sur cette base, générer les informations de remplacement (105).

3. Unité de commande secondaire (100) selon l'une quelconque des revendications précédentes, **caractérisée en ce que**
l'unité de commande secondaire (100) est conçue pour détecter de premières informations utiles (221) fournies sous la première identification d'émetteur par l'intermédiaire du canal de transmission de données (210), et
dans laquelle la condition est basée sur l'absence de premières informations utiles (221) fournies sous la première identification d'émetteur par l'intermédiaire du canal de transmission de données (210).

4. Unité de commande secondaire (100) selon l'une quelconque des revendications précédentes,
**caractérisée en ce que**
l'unité de commande secondaire (100) présente une connexion de données séparée vers l'unité de commande primaire (220) et est conçue pour recevoir un signal de l'unité de commande primaire (220) par l'intermédiaire de la connexion de données séparée, dans laquelle la condition est basée sur la réception du signal par l'unité de commande secondaire (100).

5. Unité de commande secondaire (100) selon l'une quelconque des revendications précédentes,
**caractérisée en ce que**
la voie de transmission de données (210) comprend au moins un bus (210, 211, 212).

6. Unité de commande secondaire (100) selon la revendication 5,
**caractérisée en ce que**
la première identification d'émetteur et la seconde identification d'émetteur comprennent respectivement au moins une partie d'un champ d'identification selon un protocole de bus.

7. Réseau de communication de données (200) pour un véhicule, le réseau de communication de données (200) comprenant :
au moins un bus (210, 211, 212) ; et
une unité de commande primaire (220) conçue pour fournir de premières informations utiles (221) sur l'au moins un bus (210, 211, 212) sous une première identification d'émetteur se référant de manière univoque à l'unité de commande primaire (220),
**caractérisé en ce que**
le réseau de communication de données (200) comprend une unité de commande secondaire (100) conçue selon la revendication 5 ou selon la revendication 6.

8. Réseau de communication de données (200) selon la revendication 7,
**caractérisé en ce que**
l'unité de commande primaire (220) est une unité de commande électronique destinée à une première unité de freinage du véhicule et l'unité de commande secondaire (100) est une unité de commande électronique destinée à une seconde unité de freinage du véhicule.

9. Réseau de communication de données (200) selon la revendication 7 ou la revendication 8, dans la mesure où il se réfère à la revendication 2,
**caractérisé en ce que**
les premières informations de déclenchement sont des valeurs mesurées par un premier capteur de vitesse de rotation et les secondes informations de déclenchement sont des valeurs mesurées par un second capteur de vitesse de rotation, dans lequel
- le premier capteur de vitesse est différent du second capteur de vitesse ou
- le premier capteur de vitesse est identique au second capteur de vitesse.

10. Réseau de communication de données selon l'une quelconque des revendications 7 à 9,
**caractérisé en ce que**
la condition comprend un de ce qui suit :
- une erreur interne dans l'unité de commande primaire (220),
- une défaillance de l'alimentation électrique de l'unité de commande primaire (220),
- une erreur dans une commande de l'unité de commande primaire (220),
- une défaillance d'un capteur conçu pour envoyer à l'unité de commande primaire des données de mesure destinées à générer la première information utile.

11. Véhicule utilitaire,
**caractérisé par**
un réseau de communication de données (200) selon l'une quelconque des revendications 7 à 10.

12. Procédé pour la mise à disposition redondante de premières informations utiles (221) dans un véhicule, le véhicule comprend une voie de transmission de données (210), une unité de commande primaire (220) conçue pour fournir les premières informations utiles (221) par l'intermédiaire de la voie de transmission de données (210) sous une première identification d'émetteur se référant de manière univoque à l'unité de commande primaire (220), et une unité de commande secondaire (100) conçue pour fournir de secondes informations utiles (101) par l'intermédiaire du canal de transmission de données (210) sous une seconde identification d'émetteur se référant de manière univoque à l'unité de commande secondaire (100), le procédé est
**caractérisé par** :
la détermination (S110) d'une condition ;
la mise à disposition (S120), en présence de la condition et par l'unité de commande secondaire (100), d'informations de remplacement (105) non pas avec une identification d'émetteur propre à l'unité de commande secondaire (100), mais sous la première identification d'émetteur de l'unité de commande primaire (220) par l'intermédiaire de la voie de transmission de données (210), dans lequel les informations de remplacement (105) sont les premières informations utiles (221) ou des informations utiles qui y sont associées, et dans lequel les informations de remplacement (105) sont fournies au nom de l'unité de commande primaire (220).

13. Procédé de mise en place une redondance dans un réseau de communication de données (200) d'un véhicule, dans lequel le réseau de communication de données (200) comprend au moins un bus (210, 211, 212) ainsi qu'une unité de commande primaire (220) et une unité de commande secondaire (100), et dans lequel l'unité de commande primaire (220) est conçue pour fournir de premières données d'utilisateur (221) sous une première identification d'émetteur se référant de manière univoque à l'unité de commande primaire (220) par l'intermédiaire de l'au moins un bus (210, 211, 212), et dans lequel l'unité de commande secondaire (100) est conçue pour fournir de secondes données utilisateur (101) sous une seconde identification d'émetteur se référant de manière univoque à l'unité de commande secondaire (100) par l'intermédiaire de l'au moins un bus (210, 211, 212), le procédé consiste à configurer l'unité de commande secondaire (100) pour détecter une condition et, en présence de la condition, pour fournir des informations de remplacement (105) non pas avec une identification d'émetteur propre à l'unité de commande secondaire (100), mais sous la première identification d'émetteur de l'unité de commande primaire (220) par l'intermédiaire de l'au moins un bus (210, 211, 212), dans lequel les informations de remplacement (105) sont les premières informations utiles (221) ou des informations utiles qui y sont associées, et dans lequel l'unité de commande secondaire fournit les informations de remplacement (105) au nom de l'unité de commande primaire (220).

14. Support de stockage lisible par ordinateur, comprenant des instructions qui amènent une machine de traitement de données à mettre en œuvre le procédé selon la revendication 12 ou le procédé selon la revendication 13.
